# EUROPEAN PATENT SPECIFICATION

(11) **EP 2 151 330 B1**
(45) Date of publication and mention of the grant of the patent: **05.09.2018**
(21) Application number: 07822931.7
(22) Date of filing: 19.09.2007
(51) Int. Cl.: B44F 9/04, F16S 1/00, B29C 33/38, B29C 39/00, B44C 3/04, B44C 5/04, E04F 13/12, E04F 13/18, E04C 2/04, B29C 39/02, B29C 44/12, E04C 2/20, E04C 2/288, E04C 2/00, B29L 31/10

(54) **METHOD FOR OBTAINING A PREFABRICATED PANEL FOR OUTDOOR AND INDOOR DECORATION**
VERFAHREN ZUM ERHALT EINER VORGEFERTIGTEN PLATTE FÜR AUSSEN- UND INNENDEKORATION
PROCÉDÉ PERMETTANT DE RÉALISER UN PANNEAU PRÉFABRIQUÉ POUR LA DÉCORATION EXTÉRIEURE ET INTÉRIEURE

(30) Priority: 29.09.2006 ES 200602491
(43) Date of publication of application: 10.02.2010
(73) Proprietor: Leva Candela, Jose Juan, 03802 Alcoy (Alicante) (ES)
(72) Inventor: LEVA CANDELA, Jose Juan, 03800 Alcoy Alicante (ES)
(74) Representative: Maldonado Jordan, Julia
(86) International application number: PCT/ES2007/000524
(87) International publication number: WO 2008/037825

(56) References cited:
- EP-A1- 0 152 491
- ES-A1- 2 199 071
- ES-A1- 2 199 071
- GB-A- 1 404 879
- US-A1- 2005 229 527
- US-B1- 6 207 241
- US-B2- 6 548 157

## Description

### Object of the Invention

The present invention relates to a method for obtaining a prefabricated panel, which is indistinctly valid for outdoor or indoor decoration, i.e., for covering partition walls and ceilings, as well as for covering façades.

The object of the invention is to achieve a panel which, in parallel with its decorative features, offers fireproof characteristics, and all of this with a high coefficient of both thermal and acoustic insulation.

The invention is thus comprised in the field of construction materials.

### Background of the Invention

Invention patent P 200201691 (published as ES2199071A1) discloses prefabricated panels for outdoor and indoor decoration based on polyurethane, having an outer appearance similar to that of assembly of bricks or of stone pieces, such that they can be used as a replacement of these classic materials, offering a similar appearance with a reduced wall thickness and with considerable size, which also considerably facilitate their assembly.

More specifically, the panel is formed from a mixture of polyol and isocyanate which is introduced into a mould previously and internally impregnated with iron oxides and mortars for ceramic tips, such iron oxides and mortars being coated by a mould release paint.

Said panel is susceptible to subsequently receiving a hydrolyzed varnish, to protect the aesthetic appearance thereof, with regard to the elements imitating bricks, stone or the material in question, with the corresponding joints thereof.

A highly decorative panel is thus achieved which manages to reliably imitate the desired construction materials, but the use of which is, however, limited in those faces which, due to the use conditions of the enclosure to which they belong, must have fireproof characteristics, such as for example public establishments where there is a certain fire hazard.

### Description of the Invention

The method proposed by the invention allows obtaining a prefabricated panel which, in addition to the features inherent to a panel such as the one of the invention patent mentioned in the previous paragraph, solves the problem of the practical use thereof in enclosures in which fireproof characteristics are required in the overlay.

To that end and more specifically, the following operative phases are established in said method:
- A silicone, resin or metal mould is produced on a surface of natural stone, of bricks, rocks or another similar material of those normally used in the construction field, or simply on a smooth surface, in order to obtain inside said mould a surface which is adapted in shape and size to the surface of the material intended to be reproduced.
- Then, and after applying any suitable mould release product to the mould, it is decorated with colours by means of incorporating to the mould iron oxides or any other type of various pigments with different colours which are considered to be suitable.
- In parallel, a mixture of an acrylic polymer mixed with calcium sulphate is made in a ratio of two parts of sulphate for one part of polymer.
- This mixture is applied to the mould, either in an automated manner, by means of a suitable feed machine, or manually, spreading it uniformly in any case to achieve a thickness comprised between 2 and 10 mm according to the type of panel to be obtained and the features envisaged therefor.
- The mould is then filled up with expanded polyurethane in order to compact the panel.
- After the mould is released, the panel is completely finished.

A fireproof effect, determined by the participation of the acrylic polymer, and in parallel a thermal and acoustic insulation effect, due to the expanded polyurethane, is thus achieved in one and the same part.

More specifically, the non-flammable nature of the acrylic polymer mixed with calcium phosphate is a fire barrier for the panel which makes the latter non-flammable as a whole.

### Description of the Drawings

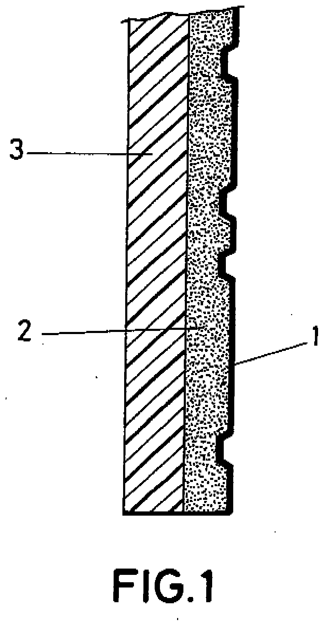

To complement the description which is being made and for the purpose of aiding to better understand the features of the invention according to a practical embodiment thereof, a single sheet of drawings is attached as an integral part of said description, in which a partial section detail of a prefabricated panel for outdoor and indoor decoration, produced with the manufacturing method object of the present invention, is depicted with an illustrative and non-limiting character and in its sole figure.

### Preferred Embodiment of the Invention

According to what is shown in the indicated figure, and after obtaining the mould which will in turn allow subsequently manufacturing the panel, the layer (1) based on iron oxides or any other type of pigments which are considered to be suitable and necessary is applied on the bottom of said mould, duly configured to provide the panel with the appearance of bricks, stone, etc., so that the panel to be obtained not only has on its front face the reliefs typical of the material intended to be reproduced, but furthermore an also suitable colour.

A mixture (2) of acrylic polymer mixed with calcium sulphate, with a ½ ratio between these components, i.e., one part of polymer for two parts of calcium sulphate, is poured onto this layer (1) of iron oxides and other pigments.

After applying this polymer layer (2), the mould is filled up with a layer (3) of expanded polyurethane, which completes the panel.

A panel is thus achieved which has an aesthetic appearance virtually identical to that of a surface obtained based on classic construction materials such as the repeatedly mentioned bricks, stone, etc., which is furthermore lightweight and large in order to facilitate its assembly, is fireproof and has a high coefficient of both thermal and acoustic insulation.

## Claims

1. A method for obtaining a prefabricated panel for outdoor and indoor decoration, of the type of those imitating any conventional cladding based on bricks, natural stone, or others, comprising:
- A silicone, resin or metal mould is produced on a surface obtained based on the material intended to be reproduced;
- Any suitable mould release product is spread inside said mould;
- A layer (1) based on iron oxides and/or pigments suitable for the chromaticity of the surface to be reproduced is then applied to the mould;
- In parallel, a mixture consisting of an acrylic polymer and of calcium sulphate is made in a 1/2 ratio, i.e., one part of polymer for two parts of sulphate;
- The mixture of acrylic polymer (2) and calcium sulphate is incorporated into the mould by any suitable means, spreading it uniformly until achieving a thickness comprised between 2 and 10 mm;
- The mould is then filled with expanded polyurethane (3) in order to compact the panel;
- Finally, the mould is released, the completely finished panel being obtained.

## Patentansprüche

1. Verfahren zum Erhalt einer vorgefertigten Platte für Außen- und Innendekoration, der Art derjenigen, welche jede herkömmliche Verkleidung basierend auf Ziegelsteinen, Naturstein oder Anderen imitiert, umfassend:
- das Herstellen einer Silikon-, Harz- oder Metatlform auf einer Oberfläche, welche basierend auf dem Material erhalten wird, welches nachgemacht werden soll;
- das Ausbreiten jedes geeigneten Entformungsmittels innerhalb der genannten Form;
- das nachträgliche Aufbringen auf der Form einer Schicht (1) basierend auf Eisenoxiden und/oder Pigmenten, welche für die Farbigkeit der nachzumachenden Oberfläche geeignet sind;
- das parallele Zubereiten einer Mischung bestehend aus einem Acrylpolymer und aus Calciumsulfat in einem 1/2-Verhältnis, d.h., einem Teil Polymer zu zwei Teilen Sulfat;
- das Einbringen der Mischung aus Acrylpolymer (2) und Calciumsulfat in die Form mittels jedes geeigneten Mittels, unter gleichmäßiger Ausbreitung derselben bis eine Dicke erreicht wird, welche zwischen 2 und 10 mm liegt;
- das nachträgliche Füllen der Form mit expandiertem Polyurethan (3) um die Platte zu verdichten;
- das endgültige Entformen, wobei die vollständig fertige Platte erhalten wird.

## Revendications

1. Procédé permettant de réaliser un panneau préfabriqué pour la décoration extérieure et intérieure, du type de ceux imitant n'importe quel revêtement conventionnel basé sur des briques, de la pierre naturelle, ou d'autres, comprenant :
- un moule de silicone, résine ou métallique est produit sur une surface obtenue basée sur le matériau destiné à être reproduit,
- un produit de démoulage approprié quelconque est épandu à l'intérieur dudit moule,
- une couche (1) basée sur des oxydes de fer et/ou des pigments appropriés pour la chromaticité de la surface à reproduire est alors appliquée au moule.
- parallèlement, un mélange consistant en un polymère acrylique et du sulfate de calcium est réalisé dans un rapport de 1/2, c'est-à-dire, une partie de polymère pour deux parties de sulfate,
- le mélange de polymère acrylique (2) et de sulfate de calcium est incorporé dans le moule par des moyens appropriés, en l'épandant uniformément Jusqu'à l'obtention d'une épaisseur comprise entre 2 et 10 mm,
- le moule est alors rempli de polyuréthane expansé (3) afin de compacter le panneau,
- finalement, le moule est libéré, le panneau complètement fini étant obtenu.
